# EUROPÄISCHE PATENTSCHRIFT

(11) **EP 2 025 495 B1**
(45) Veröffentlichungstag und Bekanntmachung des Hinweises auf die Patenterteilung: **27.04.2011**
(21) Anmeldenummer: 08011387.1
(22) Anmeldetag: 24.06.2008
(51) Int. Cl.: B29C 47/68

(54) **Vorrichtung zum Filtrieren eines Fluids, insbesondere eines verflüssigten Kunststoffes**
Device for filtering a fluid, in particular a liquefied plastic
Dispositif de filtrage d'un liquide, en particulier d'un plastique liquéfié

(30) Priorität: 30.07.2007 DE 102007036013; 11.12.2007 DE 102007059579
(43) Veröffentlichungstag der Anmeldung: 18.02.2009
(73) Patentinhaber: Kreyenborg Verwaltungen und Beteiligungen GmbH & Co. KG, D-48157 Münster (DE)
(72) Erfinder: Middler, Robert, 48329 Havixbeck (DE); Brandt, Oliver, 27432 Bremervörde (DE); Bußmann, Dirk, 48301 Nottuln (DE); Andreß, Michael, 48341 Altenberge (DE); Wöstmann, Stefan, 48336 Sassenberg (DE)
(74) Vertreter: Habbel, Ludwig

(56) Entgegenhaltungen:
- EP-A- 1 245 366
- WO-A-2004/037514

## Beschreibung

Die Erfindung bezieht sich auf eine Vorrichtung zum Filtrieren eines Fluids, insbesondere eines verflüssigten Kunststoffes gemäß dem Oberbegriff des Hauptanspruches.

Im Folgenden wird allgemein von "Sieb" oder "Filterelement" gesprochen, wobei damit die verschiedenartigsten Siebe, Filter oder andere Rückhalteeinrichtungen für Verschmutzungen angesprochen sind.

Aus der WO 2004/037514 A2 oder der EP 1 245 366 A, die beide gleichermaßen als nächstkommender Stand der Technik angesehen werden, ist jeweils eine Filtervorrichtung mit zwei länglichen Siebträgern bekannt. Die Siebträger sind jeweils und unabhängig voneinander in Längsrichtung zwischen einer Produktionsstellung und einer Reinigungs- bzw. Wartungsstellung verschiebbar. In der Produktionsstellung befinden sich die Siebe vollständig innerhalb des Gehäuses, und in der Reinigungs- bzw. Wartungsstellung ragt der jeweilige Siebträger so weit aus dem Gehäuse, dass das Sieb frei zugänglich ist. Während der Reinigung bzw. Wartung des einen Siebes kann der verflüssigte Kunststoff durch das andere Sieb in dem anderen Siebträger strömen, so dass eine nachgeschaltete Einrichtung kontinuierlich mit verflüssigtem Kunststoff versorgt werden kann.

Die Siebe weisen jeweils eine in Längsrichtung des Siebträgers langgestreckte Form auf. In Längsrichtung des Siebes gesehen, münden zwei Teilkanäle hintereinander in den Siebraum, um angesichts der Länge des Siebes eine gleichmäßige Zufuhr des verflüssigten Kunststoffs in den Siebraum zu bewirken.

Aus der DE 295 17 140 U1 ist es bekannt geworden, das Sieb oval auszubilden und aus dem DE-GM 87 01 110 ist es bekannt geworden, das Sieb polygonal auszubilden. Hierdurch soll das Ziel verfolgt werden, eine möglichst große Siebfläche in einem möglichst kleinen Siebträger unterzubringen. Aus der Darstellung der Anordnung gemäß der DE 295 17 140 U1 ist erkennbar, dass beim Siebwechsel und somit bei einem Ausschieben des Siebträgers der eigentliche Siebraum über einen relativ langen Weg mit dem Zufuhrkanal in Verbindung steht, ehe diese Verbindung unterbrochen wird. Entsprechend groß muss das Gehäuse ausgestaltet sein, um den oben erwähnten Kurzschluss zu vermeiden.

Der vorliegenden Erfindung liegt die Aufgabe zugrunde, einen Siebträger mit einem langgestreckt ovalen oder polygonalen Filterelement auszurüsten, wobei bei Führung des Siebträgers zum Zwecke des Siebwechsels die Zufuhr des zu filtrierenden Fluids zum Siebraum bereits nach kurzer Bewegung des Siebträgers unterbrochen wird.

Diese der Erfindung zugrundeliegende Aufgabe wird durch die Lehre des Hauptanspruches gelöst.

Vorteilhafte Ausgestaltungen sind in den Unteransprüchen erläutert.

So wird im Hauptanspruch eine Anordnung beschrieben, bei der im Siebträger ein Sieb oder Filterelement angeordnet ist, während im Anspruch 2 eine Anordnung beschrieben wird, bei welchem im Siebträger in an sich bekannter Weise zwei einander gegenüberliegende Sieb in einem Siebraum vorgesehen sind.

In beiden Fällen führen vom Zufuhrkanal zwei Zufuhrteilkanäle zu dem im Siebträger ausgearbeiteten Siebraum, so dass dieser in Siebwechselrichtung gesehen, im vorderen und im hinteren Bereich mit zu filtrierendem Kunststoff beschickt wird. Der in Siebwechselrichtung gesehen vordere Zufuhrteilkanal mündet dabei in einem im Siebträger ausgearbeiteten Kanal, der den zu filternden Kunststoff dem Siebraum zuführt.

Werden im Siebträger zwei einander gegenüberliegende Filterelemente oder Siebe in einem Siebraum vorgesehen, teilt sich der in Siebwechselrichtung gesehen hintere Zufuhrteilkanal umgekehrt V-förmig und mündet damit auf die beiden Schmutzsiebseiten der Siebe, während der vordere Zufuhrteilkanal in einen im Siebträger ausgearbeiteten Führungskanal mündet, der zu den beiden Filterelementen auf der Schmutzsiebseite führt.

Es ist ersichtlich, dass durch Verschieben des Siebträgers die Mündung des vorderen Zufuhrteilkanals nach einem Weg verschlossen wird, der dem Durchmesser des Zufuhrteilkanales entspricht, so dass nach sehr kurzem Weg die Zufuhr des zu filtrierenden Kunststoffes unterbrochen wird.

Selbstverständlich können beide vorstehend beschriebenen Einrichtungen auch in einer Rückspülversion ausgebildet sein, wobei entsprechende Kanalführungen vorgesehen sein müssen.

Ein Ausführungsbeispiel der Erfindung wird nachfolgend anhand der Zeichnungen erläutert. Die Zeichnungen zeigen dabei in
- Fig. 1: schaubildlich die erfindungsgemäße Anordnung, wobei ein Siebträger aus dem Gehäuse nach vorne vorgezogen ist, um das Filterelement auszuwechseln, in
- Fig. 2: einen Schnitt durch Gehäuse und Siebträger im Bereich des Führungskanales, in
- Fig. 3: einen Schnitt durch Gehäuse und Siebträger im Bereich der Mündung des rückwärtigen Zufuhrteilkanals, in
- Fig. 4: eine abgeänderte Ausführungsformder Anordnung gemäß Fig. 2 mit zwei Verbindungskanälen, in
- Fig. 5: schematisch eine Seitenansicht auf die Anordnung gemäß Fig. 1, in
- Fig. 6: schematisch eine Draufsicht auf die Anordnung gemäß Fig. 1 und in
- Fig. 7: einen Siebträger, wenn dieser aus dem Gehäuse ausgezogen ist.

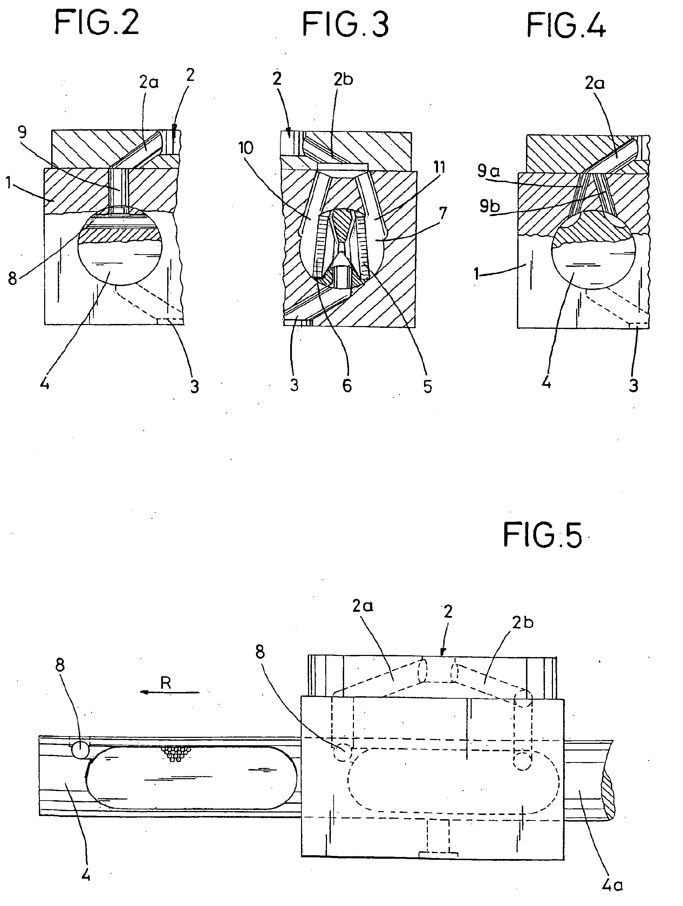

In den Zeichnungen ist mit 1 ein Gehäuse bezeichnet, das einen Zufuhrkanal 2 und einen Abfuhrkanal 3 für verflüssigten Kunststoff aufweist, wobei auf dem Weg vom Zufuhrkanal 2 zum Abfuhrkanal 3 bei dem dargestellten Ausführungsbeispiel zwei Siebträger 4, 4a vorgesehen sind. In den Siebträgern sind - wie dies die Fig. 3 zeigt - sogenannte Siebräume 7 oder Kavitäten ausgearbeitet, in denen Filterelemente bzw. Siebe 5 und 6 angeordnet sind, die bei dem in Fig. 3 dargestellten Ausführungsbeispiel einander gegenüberliegend vorgesehen sind, so dass der zu filtrierende Kunststoff von außen zugeführt und im Inneren abgeführt wird.

Selbstverständlich bezieht sich die Erfindung auch auf einen Siebträger, in dem nur ein Sieb angeordnet ist.

Vom Zufuhrkanal 2 aus teilt sich dieser in zwei Zufuhrteilkanäle 2a und 2b, wobei der Zufuhrteilkanal 2a in Siebwechselrichtung R führt, während der Zufuhrteilkanal 2b zur in Siebwechselrichtung R gesehenen rückwärtigen Schmutzsieboberfläche führt.

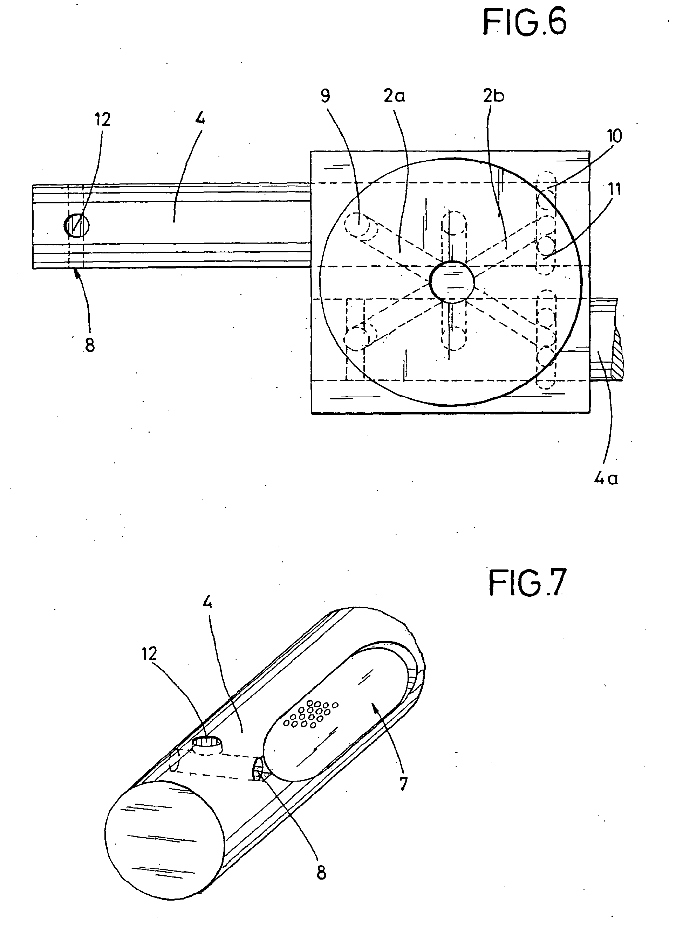

Fig. 2 zeigt, dass der Zufuhrteilkanal 2a dann, wenn im Siebraum 7 zwei einander gegenüberliegende Filterelemente 5 und 6 vorgesehen sind, im Gehäuse 1 ein Verbindungskanal 9 ausgearbeitet ist, der einenendes mit dem Zufuhrteilkanal 2a in Verbindung steht, anderenendes umfangsmäßig gesehen mittig, d. h. bei 12:00 Uhr, auf den Siebträger 4 mündet. Hier steht dieses Ende des Verbindungskanales 9 mit einem Führungskanal 8 in Verbindung, der zu den beiden Schmutzsiebseiten der Siebe 5 und 6 führt. Der Verbindungskanal 9 fluchtet mit einer entsprechenden Bohrung 12 im Siebträger 4 (Fig. 6), die die Verbindung zum Führungskanal 8 herstellt.

Fig. 4 zeigt eine Ausführungsform, bei der der Zufuhrteilkanal 2a zu zwei im Gehäuse 1 ausgearbeiteten Verbindungskanälen 9a und 9b führt, die im Siebträger 4 in Führungen münden, die zu den beiden Schmutzsiebseiten der Siebe 5 und 6 führen.

Hieraus ist ersichtlich, dass bei einer Bewegung des Siebträgers 4 um eine Länge, die dem Durchmesser des Verbindungskanales 9 bzw. der beiden Verbindungskanäle 9a und 9b entspricht, eine Abtrennung der Siebräume 7 vom Zufuhrteilkanal 2a erfolgt.

Der in Siebwechselrichtung R gesehen rückwärtige Zufuhrteilkanal 2b teilt sich noch innerhalb des Gehäuses 1 in zwei Verbindungskanäle 10 und 11, die ihrerseits in den Siebraum 7 auf der Schmutzsiebseite der Siebe 5 und 6 münden (siehe Fig. 3).

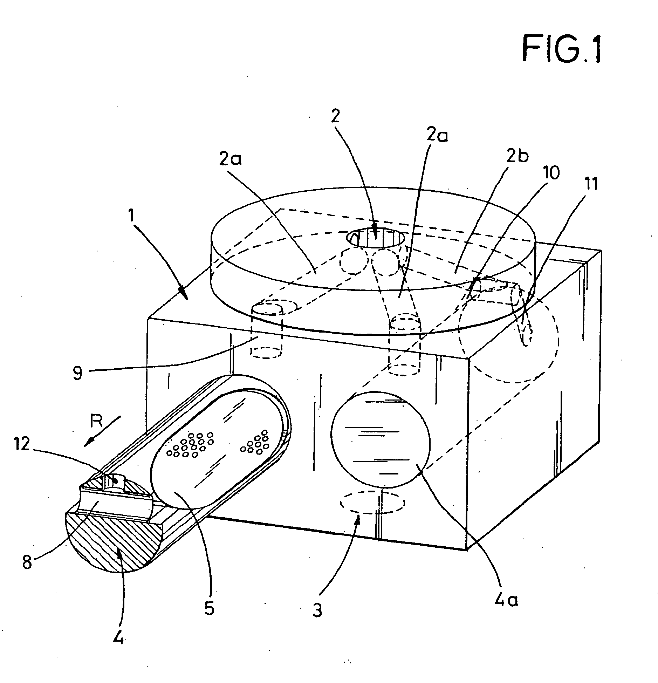

An dieser Stelle sei ausdrücklich darauf hingewiesen, dass der Führungskanal 8 so wie in Fig. 1 und in Fig. 2 dargestellt als Bohrung innerhalb des Siebträgers 4 ausgeführt sein kann, dass aber in gleicher Weise die Möglichkeit besteht, dass der Verbindungskanal 9 in eine Nut an der Oberseite des Siebträgers 4 mündet, die anstelle des Führungskanales 8 vorgesehen ist.

In der Zeichnung nicht dargestellt ist die Möglichkeit, die vorbeschriebene Vorrichtung auch in der Rückspülversion auszubilden, wobei entsprechende Kanalführungen vorgesehen sein müssen.

## Patentansprüche

1. Vorrichtung zum Filtrieren eines Fluids, insbesondere eines verflüssigten Kunststoffes mit einem Gehäuse (1) mit mindestens einem Zufuhrkanal (2), einem Abfuhrkanal (3), wobei im Strömungsweg des Fluids in mindestens einem quer zur Strömungsrichtung verschieblich gelagerten Siebträger (4, 4a) mindestens ein Sieb (5, 6) in einem entsprechenden Siebraum angeordnet und mit dem Zufuhrkanal (2) und dem Abfuhrkanal (3) in Verbindung bringbar ist, wobei das Sieb (5, 6) langgestreckt oval oder polygonal ausgebildet ist und der Zufuhrkanal (2) sich in zwei Zufuhrteilkanäle (2a, 2b) aufteilt, die in Siebwechselrichtung (R) hintereinander auf der Schmutzsiebseite in den Siebraum (7) münden,
**dadurch gekennzeichnet,**
**dass** der in Siebwechselrichtung (R) vordere Zufuhrteilkanal (2a) in einen im Siebträger (4) ausgearbeiteten Kanal (8) mündet, der den zu filternden Kunststoff dem Siebraum (7) zuführt.

2. Vorrichtung nach Anspruch 1, **dadurch gekennzeichnet**, das im Siebträger (4, 4a) zwei einander gegenüberliegende Filtersiebe (5, 6) in einem Siebraum (7) angeordnet sind, dass der in Siebwechselrichtung (R) hintere Zufuhrteilkanal (2b) sich umgekehrt V-förmig aufteilt und zu den beiden Sieben (5, 6) auf der Schmutzsiebseite führt und
dass der in Siebwechselrichtung (R) vordere Zufuhrteilkanal (2a) in einen im Siebträger (4) ausgearbeiteten Führungskanal (8) mündet, der zu den beiden Sieben (5, 6) auf der Schmutzsiebseite führt.

3. Vorrichtung nach Anspruch 2, **dadurch gekennzeichnet, dass** der Führungskanal (8) als Bohrung im Siebbolzen (4, 4a) vorgesehen ist.

4. Vorrichtung nach Anspruch 2, **dadurch gekennzeichnet, dass** der Führungskanal (8) als Nut im Siebbolzen (4, 4a) ausgearbeitet ist.

5. Vorrichtung nach Anspruch 2, **dadurch gekennzeichnet, dass** der Zufuhrteilkanal (2a) in zwei im Gehäuse (1) vorgesehene Verbindungskanäle (9a, 9b) mündet, die mittelbar oder unmittelbar zu den beiden Schmutzsiebseiten der Siebe (5, 6) führen.

6. Vorrichtung nach Anspruch 2, 3 oder 4 **dadurch gekennzeichnet, dass** der Zufuhrteilkanal (2a) umfangsmäßig mittig auf den Siebbolzen (4) mündet und hier mit dem Führungskanal (8) in Verbindung steht.

7. Vorrichtung nach Anspruch 5, **dadurch gekennzeichnet, dass** der Zufuhrteilkanal (2a) umfangsmäßig mitten auf dem Siebbolzen (4) mündet und hier mit den Verbindungskanälen (9a, 9b) in Verbindung steht.

## Claims

1. Device for filtering a liquid, particularly a liquefied plastic, having a housing (1) with at least one inflow channel (2), an outflow channel (3), where at least one screen (5, 6) is disposed in a corresponding screen chamber in one or more screen holders (4, 4a) displaceably mounted across the direction of flow in the flow path of the fluid and can be brought into connection with the inflow channel (2) and the outflow channel (3), where the screen (5, 6) is shaped elongatedly oval or polygonal and the inflow channel (2) divides into two inflow sub-channels (2a 2b), which run into the screen chamber (7) one after the other in the screen change direction (R) on the soil screen side,
**characterised in that**
the front inflow sub-channel (2a) in the screen change direction (R) runs into a channel (8) which is constructed in the screen holder (4) and conducts the plastic to be filtered to the screen chamber (7).

2. Device in accordance with claim 1, **characterised in that** in the screen holder (4, 4a) two opposing filter screens (5, 6) are disposed in the screen chamber (7), the rear inflow sub-channel (2b) in the screen change direction (R) divides into an inverted V and leads to the two screens (5, 6) on the soil screen side and
that the front inflow sub-channel (2a) in the screen change direction (R) runs into a guide channel (8) constructed in the screen holder (4), which guide channel (8) leads to the two screens (5, 6) on the soil screen side.

3. Device in accordance with claim 2, **characterised in that** the guide channel (8) is provided for as a hole in the screen plunger (4, 4a).

4. Device in accordance with claim 2, **characterised in that** the guide channel (8) is constructed as a groove in the screen plunger (4, 4a).

5. Device in accordance with claim 2, **characterised in that** the inflow sub-channel (2a) runs into two connecting channels (9a, 9b) provided for in the housing (1), which connecting channels (9a, 9b) lead indirectly or directly to the two soil screen sides of the screens (5, 6).

6. Device in accordance with claim 2, 3 or 4, **characterised in that** the inflow sub-channel (2a) runs circumferentially into the middle of the screen plunger (4) and there connects to the guide channel (8).

7. Device in accordance with claim 5, **characterised in that** the inflow sub-channel (2a) runs circumferentially into the middle of the screen plunger (4) and there connects to the connecting channels (9a, 9b).

## Revendications

1. Dispositif servant à filtrer un fluide, notamment une matière plastique liquéfiée, avec un boîtier (1) comportant au moins un conduit d'amenée (2), un conduit d'évacuation (3), sachant que dans le parcours d'écoulement du fluide au moins un crible (5, 6) est agencé, dans un compartiment de filtration correspondant, dans au moins un support (4, 4a) de crible en appui coulissant transversalement au sens d'écoulement, et peut être amené en liaison avec le conduit d'amenée (2) et le conduit d'évacuation (3), sachant que le crible (5, 6) est configuré étiré en longueur de forme ovale ou polygonale, et que le conduit d'amenée (2) se subdivise en deux conduits partiels d'amenée (2a, 2b) qui dans le sens (R) de changement du crible débouchent l'un derrière l'autre sur le côté sale du crible dans le compartiment de filtration (7),
**caractérisé en ce que**
le conduit partiel d'amenée (2a) avant dans le sens (R) de changement du crible débouche dans un conduit (8) usiné dans le support (4) de crible, conduit qui amène la matière plastique à filtrer dans le compartiment de filtration (7).

2. Dispositif selon la revendication 1, **caractérisé en ce que** dans le support (4, 4a) de crible deux cribles filtrants (5, 6) se faisant face sont agencés dans un compartiment de filtration (7), **en ce que** dans le conduit partiel (2b) d'amenée arrière dans le sens (R) de changement du crible se partage en V inversé et aboutit aux deux cribles (5, 6) sur le côté sale du crible, et
**en ce que** le conduit partiel (2a) d'amenée avant dans le sens (R) de changement du crible aboutit dans un conduit de guidage (8) usiné dans le support (4) de crible, conduit qui mène aux deux cribles (5, 6) sur le côté sale du crible.

3. Dispositif selon la revendication 2, **caractérisé en ce que** le conduit de guidage (8) est prévu comme alésage dans le goujon (4, 4a) de crible.

4. Dispositif selon la revendication 2, **caractérisé en ce que** le conduit de guidage (8) a été usiné en forme de gorge dans le goujon (4, 4a) de crible.

5. Dispositif selon la revendication 2, **caractérisé en ce que** le conduit partiel (2a) d'amenée aboutit dans deux conduits de liaison (9a, 9b) prévus dans le boîtier (1), conduits qui amènent directement ou indirectement aux deux côtés sales des cribles (5, 6).

6. Dispositif selon les revendications 2, 3 ou 4, **caractérisé en ce que** le conduit partiel (2a) d'amenée aboutit circonférentiellement au centre sur le goujon (4) de crible et qu'il se trouve là en liaison avec le conduit de guidage (8).

7. Dispositif selon la revendication 5, **caractérisé en ce que** le conduit partiel (2a) d'amenée aboutit circonférentiellement au centre sur le goujon (4) de crible et qu'il se trouve là en liaison avec les conduits de liaison (9, 9b).
